# EUROPEAN PATENT SPECIFICATION

(11) **EP 2 818 504 B1**
(45) Date of publication and mention of the grant of the patent: **03.06.2020**
(21) Application number: 13003298.0
(22) Date of filing: 28.06.2013
(51) Int. Cl.: C08K 5/3435, C08L 23/08

(54) **USE OF AN EXTRUSION PROCESSING AID FOR THE PRODUCTION OF COLOURED POLYETHYLENE PIPES**
VERWENDUNG EINES EXTRUSIONSVERARBEITUNGSHILFSMITTELS ZUR HERSTELLUNG FARBIGER POLYETHYLENROHRE
UTILISATION D'UN ADJUVANT DE TRAITEMENT D'EXTRUSION POUR LA PRODUCTION DE TUYAUX EN POLYÉTHYLÈNE COLORÉ

(43) Date of publication of application: 31.12.2014
(73) Proprietor: Borealis AG, 1220 Vienna (AT)
(72) Inventor: JERUZAL, Mark, Falkirk, UK-FK2 0UN (GB)
(74) Representative: Kador & Partner PartG mbB

(56) References cited:
- EP-A1- 2 511 332
- EP-A2- 2 474 585
- WO-A1-2010/040079
- JP-A- H11 106 577
- US-A1- 2004 030 009
- US-B1- 6 232 376
- Basf: "Chimassorb 2020 (Technical Information)", , 30 November 2010 (2010-11-30), XP055505920, Retrieved from the Internet: URL:http://www.mohe021.com/uploads/soft/18 0202/2020.pdf [retrieved on 2018-09-10]
- Ciba: "Ciba Additive Recommendation", , 16 August 2011 (2011-08-16), XP055506576, Retrieved from the Internet: URL:https://wenku.baidu.com/view/1b30d5324 3323968011c92cc.html?re=view [retrieved on 2018-09-12]
- E. Feyz ET AL: "Studying and increasing light stability of rotomolding grade of polyethylene", Journal of Applied Polymer Science, vol. 110, no. 3, 5 November 2008 (2008-11-05), pages 1590-1593, XP055279042, US ISSN: 0021-8995, DOI: 10.1002/app.28691

## Description

The present invention relates to the use of UV stabilisers as an extrusion processing aid for polyethylene compositions comprising pigments and to polyethylene compositions comprising pigments and UV stabilisers and to an article comprising said polyethylene composition.

Polyethylene compositions are frequently used e.g. for the production of pipes due to their favourable physical and chemical properties as e.g. mechanical strength, corrosion resistance and long-term stability. Polyethylene pipes are manufactured by extruding the molten compound through a specially designed die. The pipe is subsequently cooled in a water bath.

During extrusion of coloured pipe compounds, a phenomena known as "plate-out" frequently occurs. Plate-out, also called die build-up, die drool or die bleed, refers to the undesired and unwanted accumulation of coloured "material" or "substrate" on the open face of extrusion dies, the mandrel or the sizing or calibration sleeve within the cooling bath. This "material" or "substrate" is usually composed of pigments, additives, lubricating agent and soluble polymer parts.

Excessive plate-out has also been an issue in the extrusion processes of blown film, fibre spinning, extrusion coating, blow moulding and wire and cable coating. Plate-out causes a variety of problems. For instance, recrystallisation of the accumulated material on the sizing sleeve leads to hard pigmented "substrates" being formed, thereby scoring the external surface of the pipe and, hence, diminishing the aesthetic quality of the pipe. Even further, a negative effect of this "substrate" could be breaking off as an inclusion within the pipe wall causing premature hoop stress failure. Plate-out issues generally mean regular cleaning of the extrusion system to remove the substrate with subsequent down time leading to commercial losses.

Common methods introduce low molecular substances like lubricants, silica, oil and fluorinated processing aids and also additive to stabilise the polymer.

JP 2006057036 discloses a resin composition for pipe that causes no pigment plate-out and can produce polyethylene pipes having smooth surface. The resin composition for pipes comprises polyethylene resin, pigment, and a lubricant selected from the group consisting of fatty acid, fatty acid ester, fatty acid amine and fatty alcohol.

JP55045765 discloses a stabilized polymer composition having improved weather resistance, plate-out resistance and initial colour development. This is achieved by adding an organic phosphorous acid ester and a specific phosphoric pr phosphorous acid derivative to the polymer composition.

In WO 2006/083642 co-additives are used to improve the plate-out performance of polyolefins containing sorbitol-based clarifiers. These co-additives are selected from the group consisting of homopolymers of ethylene oxide, copolymers containing ethylene oxide segments and polycaprolactone and its derivatives and any combination thereof.

In JP H11 106577 A is disclosed the use of the hindered amine light stabiliser tetrakis(1,2,2,6,6-pentamethyl-4-piperidyl) 1,2,3,4-butanetetracarboxylate preferably together with a phenolic type, in order to avoid any plate-out at the time of processing when a pigment is used during the extrusion of compositions containing EPDM and EPR, ethylene propylene rubber.

However, there is still a need for extrusion processing aids for coloured polyethylene compositions having improved plate-out performance. Coloured means that the polyethylene composition comprises one or more pigments.

Surprisingly it was found that the above object can be solved by using a specific type of UV stabiliser in a polyethylene composition comprising pigments.

Accordingly, the present invention is based on the finding that by using a specific type of UV stabiliser in a coloured polyethylene composition plate-out can be significantly reduced or even avoided and at the same time protection against UV light is conferred.

It has surprisingly been found that addition of at least one UV stabiliser to a polyethylene composition comprising pigments improves the plate-out performance during extrusion and at the same time protection against UV light is conferred to the formed pipe.

Specifically the present invention discloses the use of at least one UV stabiliser (A) having the formula (II) 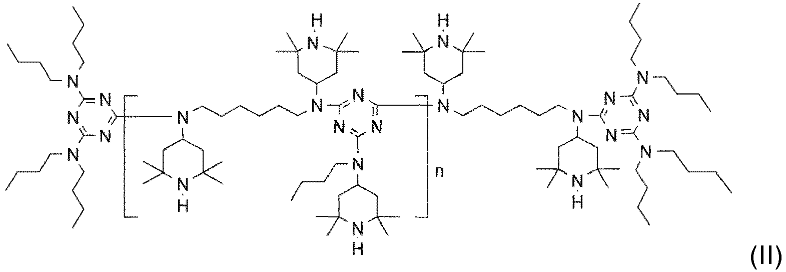 wherein n is from 1 to 6, and any combination thereof, to improve the plate-out performance during extrusion of polyethylene compositions comprising one or more pigments (C).

According to an embodiment of the present invention the UV stabiliser (A) is 0.01 to 1 wt.-% based on the total polyethylene composition. According to another embodiment of the present invention the polyethylene composition further comprises an UV absorber (B) and the absorber (B) can be 0.01 to 1 wt.-% based on the total polyethylene composition. Preferably the absorber (B) is 2-(3'-t-butyl-5'-methyl-2'-hydroxyphenyl)-5-chlorobenzotriazole having the CAS number 3896-11-5.

According to another embodiment of the present invention the pigments (C) are selected from Ultramarine Blue having CAS No. 57455-37-5 and/or titanium dioxide having CAS No. 13463-67-8 and/or Pigment Yellow 95 having CAS No. 5280-80-8 and/or Pigment Blue 15:1 having CAS No. 147-14-8 or any combination thereof.

In another particular embodiment of the present invention the polyethylene composition is extruded to a pipe.

The UV stabiliser (A) has the following formula (II): 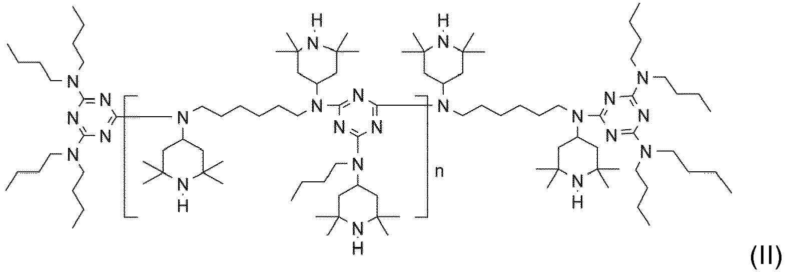 wherein n is from 1 to 6, preferably from 2 to 4, and any combination thereof.

Most preferably, the UV stabiliser (A) is 1,6-Hexanediamine, N,N'-bis(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine (CAS No.: 192268-64-7; commercially available from CIBA (BASF) as Chimassorb 2020).

Moreover, the concentration of the UV stabiliser (A) in the polyethylene composition according to the use of the present invention is preferably 0.01 to 1 wt.-%, more preferably 0.05 to 0.7 wt.-%, even more preferably 0.1 to 0.5 wt.-% and most preferably 0.2 to 0.4 wt.-% based on the total weight of the polyethylene composition.

The UV stabiliser (A) can have a weight average molecular weight (M_{w}) preferably of at least 1000 g/mol, more preferably of at least 1500 g/mol, even more preferably of at least 2000 g/mol and most preferably of at least 2500 g/mol.

The UV stabiliser (A) according to the use of the present invention has a weight average molecular weight (M_{w}) preferably not more than 5300 g/mol, more preferably not more than 4100 g/mol, and most preferably not more than 3500 g/mol.

The UV stabiliser (A) according can have a melting range (Tₘ) of preferably 80 to 450 °C, more preferably 100 to 180 °C, and most preferably 110 to 160 °C.

The UV-stabilizer (A) can be added separately to the polyethylene composition in the compounding step described below.

However, UV stabiliser (A) can also be comprised in a master batch which is added to the polyethylene composition in the compounding step described below.

### UV-absorber (B)

The polyethylene composition can preferably further comprises an UV absorber (B).

The protection mechanism of UV absorbers is based essentially on absorbing UV radiation and its dissipation so that it does not lead to photosensitisation.

An UV absorber (B) can be a compound comprising at least one hydroxylphenyl group, but does not comprise a structural unit of formula (I):

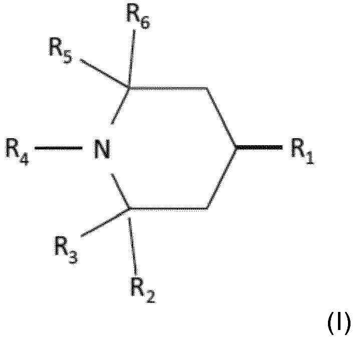

Moreover, the concentration of the UV absorber (B) in the polyethylene composition according is preferably 0.01 to 1 wt.-%, more preferably 0.05 to 0.7 wt.-%, even more preferably 0.1 to 0.5 wt.-% and most preferably 0.2 to 0.4 wt.-% based on the total weight of the polyethylene composition.

Preferably, the UV absorber (B) is 2-(3'-t-butyl-5'-methyl-2'-hydroxyphenyl)-5-chlorobenzotriazole having the CAS number 3896-11-5 (commercially available as Tinuvin 326 from Ciba), 2-hydroxy-4-n-octoxybenzophenone having CAS number 1843-05-6 (commercially available as Chimassorb 81 from Ciba), n-Hexadecyl-3,5-di-t-butyl-4-hydroxybenzoate having CAS number 67845-93-6 (commercially available as Cyasorb UV-2908 from Cytec), 2-(3',5'di-1,1-dimethylpropyl-2'-hydroxyphenyl)-benzotriazole having CAS number 25973-55-1 (commercially available as Tinuvin 328 from Ciba), 2-(2'-Hydroxy-5'-t-octylphenyl)benzotriazole having CAS number 3147-75-9 (commercially available as Tinuvin 329 from Ciba), 2-[4,6-Bis(2,4-dimethylphenyl)-1,3,5-triazin-2-yl]-5-(octyloxy)phenol having CAS number 2725-22-6 (commercially available as Tinuvin 1545 from Ciba).

The UV absorber (B) can be added separately to the polyethylene composition in the compounding step described below. However, UV absorber (B) can also be comprised in a master batch which is added to the polyethylene composition in the compounding step described below.

### Pigment (C)

The polyethylene compositions according to the use of the present invention are coloured. The colours can be white, yellow, orange, red, green, blue and black or any colour combination thereof. Coloured means that the polyethylene composition comprises one or more pigments (C). Preferably, pigment (C) is selected from the group of macrocyclic organic pigments or inorganic pigments or a mixture thereof.

A macrocycle is defined by IUPAC as a cyclic macromolecule or a macromolecular cyclic portion of a macromolecule (IUPAC Compendium of Chemical Technology).

The macrocyclic organic pigment is suitably a commercially available pigment selected from Colour Index (C.I.) Pigment Blue 15 (α-CuPc; CAS no.: 147-14-8), C.I. Pigment Blue 15:1 (α-CuPc^{s}-Cl_{0.5-1}; CAS no.: 147-14-8), C.I. Pigment Blue 15:2 (α-CuPc^{s}-Cl_{0.5-1}; CAS no.: 147-14-8), C.I. Pigment Blue 15:3 (β-CuPc; CAS no.: 147-14-8), C.I. Pigment Blue 15:4 (β-CuPc; CAS no.: 147-14-8), Pigment Blue 15:6 (ε-CuPc; CAS no.: 147-14-8), C.I. Pigment Blue 16 (Pc; 574-93-6), C.I. Pigment Green 7 (CuPc-Cl₁₄₋₁₅; CAS no.: 1328-53-6), C.I. Pigment Green 36 (CuPc-Br₁₄₋₁₅Cl₈₋₂; CAS no.: 14302-13-7), Pigment Orange 34 (CAS No. 15793-73-4), Pigment Orange 43 (CAS No. 4424-06-0), Pigment Orange 64 (CAS No. 72102-84-2), Pigment Orange 72 (CAS No. 78245-94-0), Pigment Yellow 83 (CAS No. 5567-15-7), Pigment Yellow 93 (CAS No. 5580-57-4), Pigment Yellow 95 (CAS No. 5280-80-8), Pigment Yellow 138 (CAS No. 77804-81-0), Pigment Yellow 183 (CAS No. 65212-77-3), Pigment Yellow 191 (CAS No. 129423-54-7), Pigment Yellow 180 (CAS No. 77804-81-0), Pigment Yellow 181 (CAS No. 74441-05-7) and mixtures thereof. Especially suitable are C.I. Pigment Blue 15:1, C.I. Pigment Blue 15:3 and Pigment Yellow 95 and mixtures thereof. Most suitable is C.I. Pigment Blue 15:1 or Pigment Yellow 95.

The one or more pigment (C) can also be an inorganic pigment.

Preferably, the one or more inorganic pigments are selected from Ultramarine Blue (CAS No. 57455-37-5), titanium dioxide (CAS No. 13463-67-7), Pigment Green (CAS No. 1328-53-6), Pigment Yellow 53 (CAS No. 8007-18-9), Pigment Brown 24 (CAS No. 68186-90-3), Pigment Yellow 35 (CAS No. 8048-07-5), Pigment Yellow 119 (CAS No. 68187-51-9), Pigment Yellow 184 (CAS No. 112764-76-8), Pigment Orange 20 (CAS No. 12656-57-4), Pigment Red 104 (CAS No. 12656-85-8), or carbon black or any combination thereof. Ultramarine Blue (CAS No. 57455-37-5) and/or titanium dioxide (CAS No. 13463-67-7) is more preferred.

Most preferably, a mixture of Ultramarine Blue, Pigment Blue 15:1 and titanium dioxide or a mixture of Pigment Yellow 95 and titanium dioxide is used.

Preferably, the total concentration of the one or more pigments (C) in the polyethylene composition according to the use of the present invention is preferably 0.01 to 3 wt.-%, more preferably 0.05 to 2 wt.-%, even more preferably 0.1 to 0.5 wt.-% and most preferably 0.15 to 0.35 wt.-% based on the weight of the total polyethylene composition. The total concentration of pigments (C) refers to the sum of the concentrations of the one or more the macrocyclic organic pigments and the one or more inorganic pigments.

Additionally, the polyethylene composition pigments optionally may contain further pigments, not mentioned herein. The concentration of all pigments in the polyethylene composition is preferably less than 3.5 wt.-%, more preferably less than 1.5 wt.-% and most preferably less than 0.7 wt.-% based on the total weight of the polyethylene composition. The concentration of all pigments refers to the sum of the concentrations of the one or more macrocyclic organic pigment, the one or more inorganic pigment and the further pigments.

Preferably, the one or more pigments (C) are added to the polyethylene composition according to the use of the present invention in the form of a masterbatch. The term "master batch" denotes a polymeric composition comprising in a polymeric carrier material optimally dispersed a high concentration of the one or more pigments (C). The polymeric carrier material needs to have good polymer-polymer miscibility with the polymeric resin used to make up the final polyolefin composition to form after compounding a single phase polymer-polymer-mixture. Polymeric carrier materials typically used comprise polyethylene, polyethylene copolymer, polypropylene, polystyrene, ethylene vinyl acetate, low molecular weight wax, alkyl resin, or the like.

According to the use of the present invention, the polymeric carrier material is preferably polyethylene and the polyolefin composition is the polyethylene composition according to the use of the present invention and the polymeric resin is the base resin according to the use of the present invention.

Preferably, the masterbatch according to the use of the present invention comprises the at least one macrocyclic organic pigment and/or the at least one inorganic pigment. More preferably the masterbatch according to the use of the present invention comprises the at least one macrocyclic organic pigment and the at least one inorganic pigment.

Additionally, the master batch may further comprise usual additives for utilization with polyolefins, such as further pigments, stabilizers, acid scavengers, further UV-stabilizers, antistatic agents, utilization agents (such as processing aid agents), demoulding agents, nucleating agents, fillers or foaming agents and the like or any combination thereof.

The total amount of such usual additives usually is 20 wt.-% or below based on the total weight of the master batch.

Preferably, the master batch according to the use of the present invention is added to the base resin in the compounding step described below.

Preferably, the concentration of the master batch in the polyethylene composition according to the use of the present invention is 0.5 to 10 wt.-% based on the total weight of the polyolefin composition. More preferably, the concentration is 1 to 5 wt.-% and most preferably 1.5 to 3 wt.-%.

In addition to the master batch according to the use of the present invention one or more further master batches having a different composition may be comprised in the polyethylene composition according to the use of the present invention.

Preferably, the one or more further master batches are added to the base resin in the compounding step described below.

### Polyethylene composition

Preferably the polyethylene composition according to the use of the present invention comprises a base resin comprising a polyethylene homo-or copolymer.

The term "base resin" denotes in case no master batch is added to the base resin the entirety of polymeric components in the polyolefin composition according to the use of the present invention, usually making up at least 90 wt.-% of the total weight of the polyolefin composition.

In case a master batch is added to the base resin the term "base resin" denotes the entirety of polymeric components in the polyethylene composition according to the use of the present invention except the polymeric carrier material comprised in the master batch added to the base resin.

The entirety of polymeric components in the polyethylene composition usually makes up at least 90 wt.-% of the total weight of the polyethylene composition.

It is preferred that the base resin comprises an ethylene homo- or copolymer. It is more preferred that the base resin consists of an ethylene homo- or copolymer.

In one embodiment of the invention the base resin comprises two or more polyethylene fractions with different weight average molecular weight. Such resins are usually denoted as multimodal resins.

Polyethylene compositions comprising multimodal base resins are frequently used e.g. for the production of pipes due to their favourable physical and chemical properties as e.g. mechanical strength, corrosion resistance and long-term stability. Such compositions are described e.g. in EP 0 739 937 and WO 02/102891. An especially suitable polyethylene composition for the use in the present invention is the polyethylene composition described in the Example according to the invention of EP 1 655 333.

The term molecular weight as used herein generally denotes the weight average molecular weight M_{w}.

As mentioned, usually a polyethylene composition comprises at least two polyolefin fractions, which have been produced under different polymerisation conditions resulting in different weight average molecular weights for the fractions, is referred to as "multimodal". The prefix "multi" relates to the number of different polymer fractions the composition is consisting of. Thus, for example, a composition consisting of two fractions only is called "bimodal".

The form of the molecular weight distribution curve, i.e. the appearance of the graph of the polymer weight fraction as function of its molecular weight, of such a multimodal polyolefin or polyethylene will show two or more maxima or at least be distinctly broadened in comparison with the curves for the individual fractions.

For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

In the preferred embodiment wherein the base resin consists of two polyethylene fractions, the fraction having a lower weight average molecular weight is denoted fraction (i), the other is denoted fraction (ii).

Fraction (i) preferably is an ethylene homopolymer. As a matter of definition, the expression "ethylene homopolymer" used herein relates to an ethylene polymer that consists substantially, i.e. to at least 98 wt.-%, preferably at least 99 wt.-%, most preferably 99.8 wt.-% of ethylene units.

Fraction (ii) preferably is an ethylene copolymer, and preferably comprises at least 0.1 mol% of at least one alpha-olefin comonomer. The content of comonomer is preferably at most 14 mol%.

The comonomer content of the base resin of the polyethylene composition according to the use of the present invention is preferably at least 0.1 mol%, more preferably at least 0.3 mol%, and still more preferably at least 0.7 mol% of at least one alpha-olefin comonomer. The comonomer content is preferably at most 7.0 mol%, more preferably at most 6.0 mol%, and still more preferably at most 5.0 mol%.

As an alpha-olefin comonomer, preferably an alpha-olefin having from 4 to 8 carbon atoms is used. Still more preferably an alpha-olefin selected from 1-butene, 1-hexene, 4-methyl-1-pentene and 1-octene is used. Most preferably the alpha-olefin is 1-hexene.

The base resin preferably has an MFR₅ (190 °C, 5 kg) in the range of 0.1 to 2.0 g/10 min when measured according to ISO 1133, condition T. More preferably, the MFR₅ is in the range of 0.05 to 1.0 g/10 min and most preferably in the range of 0.1 to 0.6 g/10 min.

The density of the base resin preferably is in the range of 925 to 965 kg/m³, more preferably of 932 to 955 kg/m³, even more preferably of 935 to 951 kg/m³ and most preferably 942 to 950 kg/m³ when measured according to ISO 1183-1:2004 (Method A).

In addition to the base resin, the UV stabiliser (A), pigment (C) and optionally the UV absorber (B), usual additives for utilization with polyolefins, such as further pigments, antioxidants, stabilizers, acid scavengers, further UV-stabilizers, antistatic agents, utilization agents (such as processing aid agents), demoulding agents, nucleating agents, fillers or foaming agents and the like or a combination thereof may be comprised in the polyethylene composition according to the use in the present invention.

The total amount of such usual additives usually is 20 wt.-% or below based on the total weight of the polyethylene composition.

The polymerisation catalysts for the production of the base resin of the polyethylene composition used in the present invention include coordination catalysts of a transition metal, such as Ziegler-Natta (ZN), metallocenes, non-metallocenes, Cr-catalysts etc. The catalyst may be supported, e.g. with conventional supports including silica, Al-containing supports and magnesium dichloride based supports. Preferably the catalyst is a ZN catalyst, more preferably the catalyst is a non-silica supported ZN catalyst, and most preferably a MgCl₂-based ZN catalyst. The Ziegler-Natta catalyst further preferably comprises a group 4 (group numbering according to new IUPAC system) metal compound, preferably titanium, magnesium dichloride and aluminium.

The catalyst may be commercially available or be produced in accordance or analogously to the literature. For the preparation of the preferable catalyst usable in the invention, reference is made to WO 2004/055068 and WO 2004/055069 of Borealis and EP 0 810 235. Particularly preferred Ziegler-Natta catalysts are described in EP 0 810 235. Most preferably, as a catalyst, a Ziegler-Natta catalyst in accordance with Example 1 of EP 0 688 794 is used.

Preferably the polyethylene composition is produced in a process comprising a compounding step.

In the compounding step the pigment (C) or the UV stabiliser (A) or the master batch or any combination of one or more of them and optionally UV absorber (B) and/or usual additives and further master batches are added to the base resin - which is typically obtained as a base resin powder from the reactor - and are extruded together in an extruder to yield the composition according to the use of the present invention.

However, the adding of the one or more pigments (C) or the at least one UV stabiliser (A) or of the master batch or any combination of one or more of them and optionally the UV absorber (B) and/or usual additives and further master batches may also occur during the polymerisation process of the fractions (i) and/or (ii) of the base resin and/or they may be added to the polyolefin composition before or after the compounding step.

Of course, when using the polyethylene composition according to the use of the present invention, further compounds selected from conventional additives, fillers, minerals and lubricants may be added for improving processability and surface characteristics thereof.

The polyethylene composition according to the use of the present invention is preferably extruded to a pipe.

The term "pipe" comprises pipes as well as all supplementary parts for pipes such as fittings, valves, chambers and all other parts which are commonly necessary for a piping system.

Preferably, such a pipe is used for the transport of water.

The pipe is suitable for the use in a drinking water supply system. The pipe may be used as a hot and/or cold water pipe, i.e. that it is designed for the transport of hot and/or cold water.

Herein it is also disclosed a polyethylene composition comprising one or more pigments (C) and a UV stabiliser (A) having the formula (II) 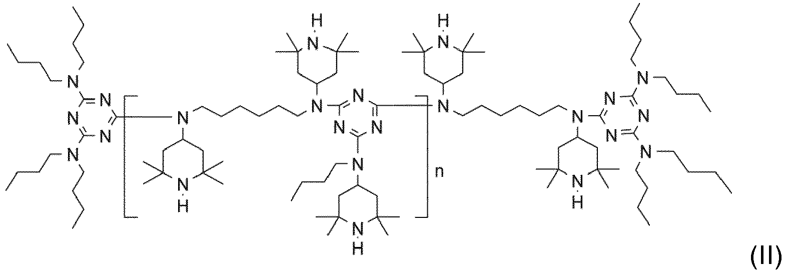 wherein n is from 1 to 6, preferably from 2 to 4, and any combination thereof, UV stabiliser (A) being present in a concentration of 0.01 to 1 wt.-% based on the total polyethylene composition.

Preferably, the polyethylene composition further comprises an UV absorber (B) in a concentration of 0.01 to 1 wt.-% based on the total polyethylene composition. The UV absorber (B) is described above. Preferably, the UV absorber (B) is 2-(3'-t-butyl-5'-methyl-2'-hydroxyphenyl)-5-chlorobenzotriazole having the CAS number 3896-11-5. The one or more pigments (C) comprised in the polyethylene composition are described above. Preferably, the pigments (C) are selected from Ultramarine Blue having CAS No. 57455-37-5 and/or titanium dioxide having CAS No. 13463-67-8 and/or Pigment Yellow 95 having CAS No. 5280-80-8 and/or Pigment Blue 15:1 having CAS No. 147-14-8 or any combination thereof.

### Figures

Figure 1 illustrates a picture of the calibrator sleeve taken immediately after extrusion of Inventive example IE1.
Figure 2 illustrates a picture of the calibrator sleeve taken immediately after extrusion of Inventive example IE2.
Figure 3 illustrates a picture of the calibrator sleeve taken immediately after extrusion of Comparative example CE1.
Figure 4 illustrates a picture of the calibrator sleeve taken immediately after extrusion of Inventive example IE3.
Figure 5 illustrates a picture of the mandrel taken after extrusion of Inventive example IE3.
Figure 6 illustrates a picture of the mandrel taken after extrusion of Comparative example CE10.

### Examples

### a) Preparation of the polyethylene pipes

The extrusion was performed on a Battenfeld 1-45- 25 B extruder, year of manufacture 1987 and a 3-zone screw. The compositions are formed into pipes having an outer diameter of 32 mm and a wall thickness of 3 mm.The following table 1 shows the temperature profile applied for pipe extrusion.

**Table 1**

| | **Inlet** | **Barrel** | | | **Die** | | | | | |
|---|---|---|---|---|---|---|---|---|---|---|
| **Zone** | 0 | 1 | 2 | 3 | 1 | 2 | 3 | 4 | 5 | 6 |
| **[°C]** | 30 | 175 | 180 | 185 | 195 | 195 | 195 | 195 | 195 | 195 |

A screw speed of 40 - 50 rpm was used with an output rate of approximately 31 kg/h. Extrusion work lasted for exactly 4 h for Inventive examples IE 1 and IE2 as well as Comparative examples CE1 to CE7, and between 90 and 210 min for Inventive example IE3 as well as Comparative examples CE8 to CE12, see below. The extruder then stopped to monitor the "plate out" on both the tooling and the calibration sleeve. The die head was further stripped for further investigation.

Prior to each run all the metal areas of the extruder, i.e. die, mandrel, calibration sleeve etc., have been cleaned and polished to ensure similar starting conditions and that no artefact was present from the previous run.

### b) Determination of the "plate-out" formation

After extrusion of the polyethylene pipes, the extrusion apparatus was dismantled for visual inspection of the calibration sleeve and the mandrel for determination of the plate-out. The calibration sleeve and/or the mandrel have been visually inspected with the naked eye. In the following, "no plate-out observations" (denoted as "-" in tables 2 and 3) means that no coloured material or substrate is observed with the naked eye on the open face of the calibration sleeve and/or the mandrel. In case plate-out is observed with the naked eye on the calibrator sleeve and/or, for instance coloured plate-out substrate of crystalline nature or coloured streaks, this is indicated in the tables given below. In particular, the denotation "high" (denoted as "+++" in tables 2 and 3) means that significant plate-out is observed on the calibration sleeve and/or the mandrel. Accordingly, "++" and "+" means that medium and little plate out is observed, respectively.

### c) Density

Density is measured according to ISO 1183-1:2004 (method A) on compression moulded specimen prepared according to EN ISO 1872-2 (February 2007) and is given in kg/m³.

### d) Melt Flow Rate

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene at a load of 2.16 kg (MFR₂) or 5.00 kg (MFR₅).

### e) MRS

The MRS of pipes prepared according to ISO 1167 is extrapolated according to the principles of ISO 9080. T

### f) List of additives

| | |
|---|---|
| Irgafos B225: | Antioxidant, |
| | Blend of Irganox 1010 (Pentaerythrityl-tetrakis(3-(3',5'-di-tert.butyl-4-hydroxyphenyl)-propionate; CAS No. 6683-19-8) and Irgafos 168 (Tris (2,4-di-*t*-butylphenyl) phosphate; CAS No. 31570-04-4) |
| Ca Stearate: | obtained from Faci, CAS No.: 1592-23-0 |
| Tinuvin 326: | UV Absorber, |
| | 2-(3'-*t*-butyl-5'-methyl-2'-hydroxyphenyl)-5-chlorobenzotriazole, |
| | CAS No. 3896-11-5 |
| Tinuvin 622: | UV Stabiliser, |
| | Dimethyl succinate polymer with 4-hydroxy-2,2,6,6-tetramethyl-1-piperidine ethanol obtained from BASF, |
| | CAS No. 65447-77-0 |
| Chimassorb 2020 | UV Stabiliser, |
| | 1,6-hexanediamine, N,N'-bis(2,2,6,6-tetramethyl-4-piperidinyl)-, polymer with 2,4,6-trichloro-1,3,5-triazine, reaction product with, N-butyl-1-butanamine and N-butyl-2,2,6,6-tetramethyl-4-piperidinamine; obtained from Ciba (BASF), |
| | CAS No. 192268-64-7 |

### Blue masterbatch (MB1):

| | |
|---|---|
| 86.15 wt% | LDPE (masterbatch carrier), density 923 kg/m³, MFR₅ = 2.2 g/10 min, |
| 8.5 wt% | Ultramarine Blue (CAS No. 57455-37-5), |
| 2.5 wt% | Pigment Blue 15:1 (CAS No. 147-14-8), |
| 2.7 wt% | Titanium dioxide (CAS No.13463-67-7), |
| 0.15 wt% | Irganox 1076 FF or Anox PP 18 Granular |

### Yellow masterbatch (MB2):

| | |
|---|---|
| 78.65 wt% | LDPE (masterbatch carrier), density 923 kg/m³, MFR₅ = 2.2 g/10 min, |
| 7.20 wt% | Pigment Yellow 95 (CAS No. 5280-80-8), |
| 4.0 wt% | Titanium dioxide (CAS No. 13463-67-7), |
| 10.0 wt% | Chimassorb 119 FL, |
| 0.15 wt% | Irganox 1076 FF or Anox PP 18 Granular. |

### Preparation of samples and results obtained

*Inventive examples IE1 and IE2 and Comparative Examples CE1 to CE7:*
The bimodal polyethylene base resin PE1 used for compounding has a density of 949 kg/m³ and a MFR₅ of 0.24 g/10 min. The base resin of inventive examples IE1 and IE2 and comparative examples CE1 to CE7 is produced as described in the example of EP 1 655 333. The density of the polyethylene composition of the IE1 and IE 2 is 951 kg/m³ and the MFR₅ is 0.30 g/10 min. The density of the polyethylene composition of CE1 to CE7 is 951 kg/m³ and the MFR₅ 0.30 g/10 min (ISO 1133, 190°C, 5.0 kg).

The resultant polyethylene composition of the IE1 and IE2 and CE1 to CE7 is classified as PE-100 material (MRS 10.0 N/mm²).

### Inventive example IE3 and Comparative Examples CE8 to CE12:

The bimodal polyethylene base resin PE2 used for compounding has a density 944 kg/m³ and a MFR₅ of 0.75 g/10 min. The base resin of inventive example IE3 and comparative examples CE8 to CE12 is produced as described in example 1 of EP 1 095 102. The density of the polyethylene composition of IE3 is 947 kg/m³ and the MFR₅ 0.80 g/10 min. The density of the polyethylene composition of CE8 to CE12 is 947 kg/m³ and the MFR₅ is 0.80 g/10 min (ISO 1133, 190°C, 5.0 kg).

The resultant polyethylene composition of the IE3 and CE8 to CE12 is classified as PE-80 material (MRS 8.0 N/mm²).

The inventive and comparative examples were compounded/melt homogenized in a ZSK 53/57 kneader. The respective base resin and additives as listed in Tables 2 and 3 were fed into the first mixer inlet of the ZSK 53/57 Kneader which is a single screw extruder with a downstream discharge single extruder with pelletizing unit cutting pellets in molten stage and cooled via water. The mixer temperature profile was 179/169/190/184/188/199 °C from first inlet to outlet, and discharge extruder temperature 185 °C. The mixer screw rpm was 201 rpm and the throughput 100 kg/h.

The compositions of the inventive and comparative examples were extruded to pipes and plate-out formation in accordance with item b) has been determined. Tables 2 and 3 show the results of the plate-out observations.

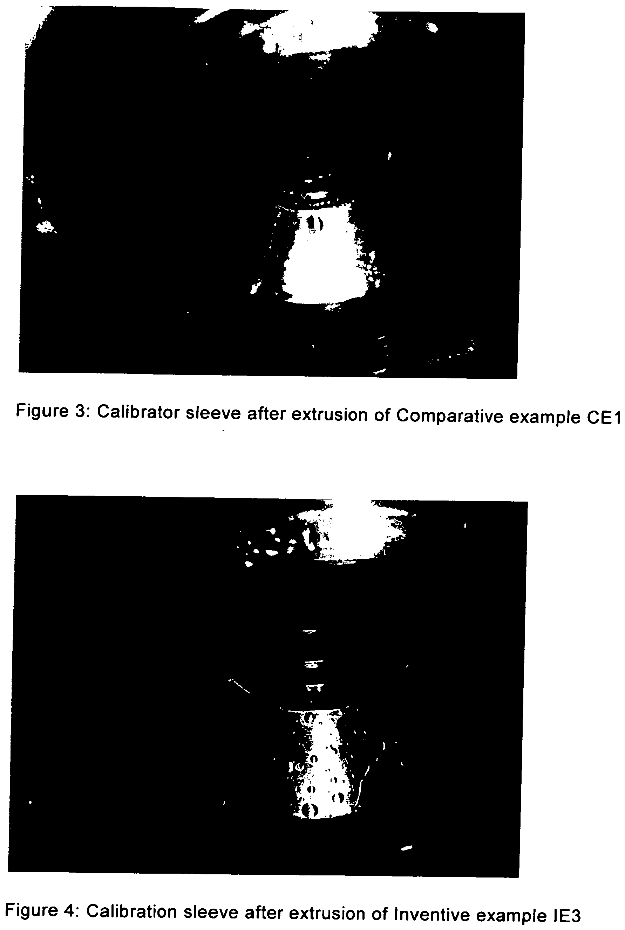

Significant plate-out is observed in Comparative example CE1 comprising "Tinuvin 622" on the calibrator sleeve as can be seen from Figure 3. A relatively high level of plate-out of hard crystalline nature was observed sticking to the calibrator. Blue streaks were also evident on the metal tooling.

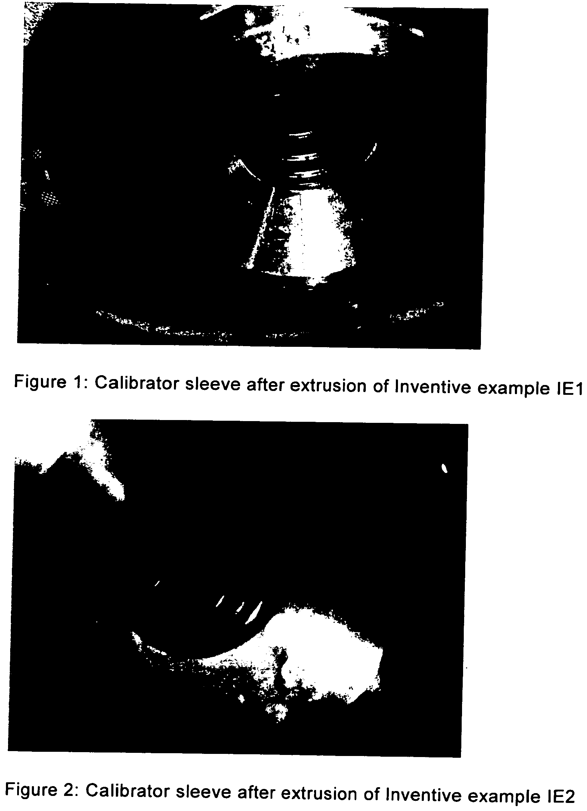

As regards Inventive examples IE1 and IE2, the calibration sleeve and tooling was very clean with no indication of any plate-out or streaking on the tooling (cf. figures 1 and 2).

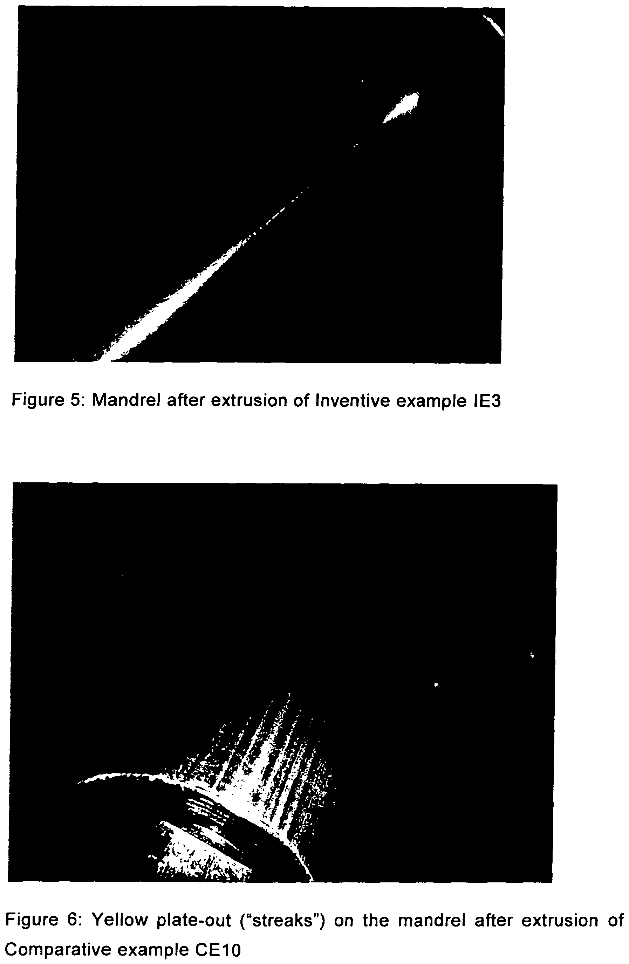

Inventive example IE3 showed a significant reduction of plate-out formation on the mandrel. Only a little plate-out can be observed on the mandrel (see figure 5). The calibration sleeve for Inventive example IE3, however, was clean (see figure 4).

In contrast thereto, Comparative example CE10 using "Tinuvin 622" instead of "Chimassorb 2020" as used in Inventive example IE3, showed significant plate-out on the surface of the mandrel (see figure 6).

**Table 2: Contents of the blue coloured polyolefin compositions of inventive (IE) and comparative examples (CE) and results of the "plate out" observations. All contents are given in wt.-%.**

| **Polyolefin composition** | | **CE1** | **CE2** | **CE3** | **CE4** | **CE5** | **CE6** | **CE7** | **IE1** | **IE2** |
|---|---|---|---|---|---|---|---|---|---|---|
| PE 1 | Polyethylene resin | 97.35 | 97.75 | 97.50 | 97.71 | 97.60 | 97.46 | 97.46 | 97.51 | 97.51 |
| Tinuvin 622 | UV stabiliser | 0.25 | | 0.25 | | | 0.25 | 0.25 | | |
| Chimassorb 2020 | UV stabiliser | | | | | | | | 0.10 | 0.10 |
| Tinuvin 326 | UV absorber | | | | | | | | 0.10 | 0.10 |
| Irgafos B225 | Anti-oxidant | 0.35 | 0.35 | 0.35 | 0.35 | 0.35 | 0.35 | 0.35 | 0.35 | 0.35 |
| MB 1 | Pigment | 1.90 | 1.90 | 1.90 | 1.90 | 1.90 | 1.90 | 1.90 | 1.90 | 1.90 |
| Ca-Stearate | Acid scavenger | 0.15 | | | 0.04 | 0.15 | 0.04 | 0.04 | 0.04 | 0.04 |
| "plate out" observation | | +++ | + | + | + | ++ | ++ | ++ | - | - |

| | | | | | | | | | | |
|---|---|---|---|---|---|---|---|---|---|---|
| +++ *high plate out;* ++ *medium plate out;* + *little plate out;* - *no plate out* | | | | | | | | | | |

**Table 3: Contents of the yellow coloured polyolefin compositions of inventive (IE) and comparative examples (CE) and results of the "plate out" observations. All contents are given in wt.-%.**

| **Polyolefin composition** | | **CE8** | **CE9** | **CE10** | **CE11** | **CE12** | **IE3** |
|---|---|---|---|---|---|---|---|
| PE 2 | Polyethylene resin | 98.35 | 98.70 | 98.50 | 98.66 | 98.55 | 98.46 |
| Tinuvin 622 | UV stabiliser | 0.20 | | 0.20 | | | |
| Chimassorb 2020 | UV stabiliser | | | | | | 0.20 |
| Irgafos B225 | Anti-oxidant | 0.30 | 0.30 | 0.30 | 0.30 | 0.30 | 0.30 |
| MB 2 | Pigment | 1.00 | 1.00 | 1.00 | 1.00 | 1.00 | 1.00 |
| Ca-Stearate | Acid scavenger | 0.15 | | | 0.04 | 0.15 | 0.04 |
| "plate out" observations | | +++ | - | +++ | ++ | +++ | + (on mandrel only) |

| | | | | | | | |
|---|---|---|---|---|---|---|---|
| +++ *high plate out;* ++ *medium plate out;* + *little plate out;* - *no plate out* | | | | | | | |

## Claims

1. Use of at least one UV stabiliser (A) of formula (II) 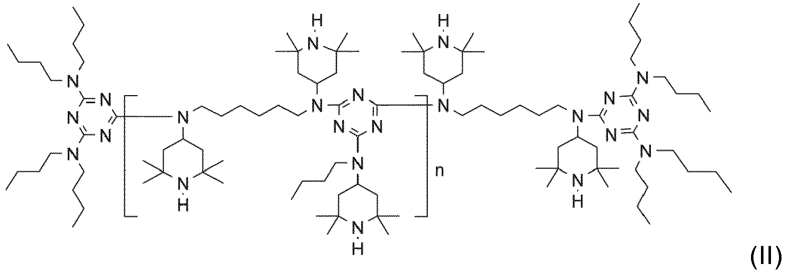 wherein n is from 1 to 6, and any combination thereof,
to improve the plate-out performance during extrusion of polyethylene compositions comprising one or more pigments (C).

2. Use according to any one of the preceding claims, wherein the concentration of the UV stabiliser (A) is 0.01 to 1 wt.-% based on the total polyethylene composition.

3. Use according to according to any one of the preceding claims, wherein the polyethylene composition further comprises an UV absorber (B).

4. Use according to claim 3, wherein the concentration of the UV absorber (B) is 0.01 to 1 wt.-% based on the total polyethylene composition.

5. Use according to claims 3 or 4, wherein the UV absorber (B) is 2-(3'-t-butyl-5'-methyl-2'-hydroxyphenyl)-5-chlorobenzotriazole having the CAS number 3896-11-5.

6. Use according to any one of the preceding claims, wherein the pigments (C) are selected from Ultramarine Blue having CAS No. 57455-37-5 and/or titanium dioxide having CAS No. 13463-67-8 and/or Pigment Yellow 95 having CAS No. 5280-80-8 and/or Pigment Blue 15:1 having CAS No. 147-14-8 or any combination thereof.

7. Use according to any one of the preceding claims, wherein the polyethylene composition is extruded to a pipe.

## Patentansprüche

1. Verwendung von mindestens einem UV-Stabilisator (A) der Formel (II) 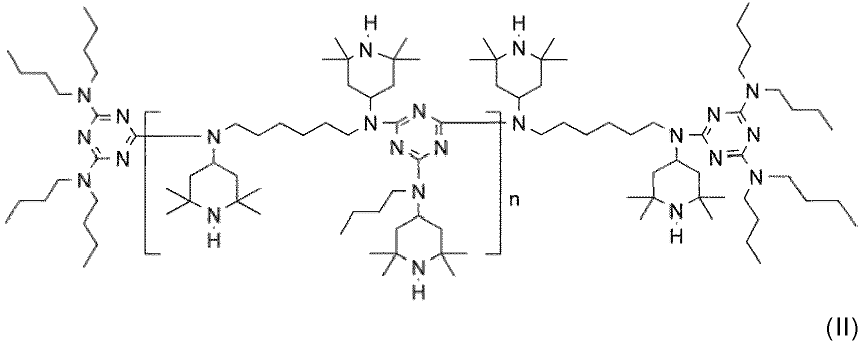 wobei n 1 bis 6 beträgt, und irgendeiner Kombination davon,
zum Verbessern des Plate-Out-Verhaltens während der Extrusion von Polyethylenzusammensetzungen, die ein oder mehrere Pigmente (C) umfassen.

2. Verwendung nach einem der vorhergehenden Ansprüche, wobei die Konzentration des UV-Stabilisators (A) 0,01 bis 1 Gew.-%, bezogen auf die gesamte Polyethylenzusammensetzung, beträgt.

3. Verwendung nach einem der vorhergehenden Ansprüche, wobei die Polyethylenzusammensetzung ferner einen UV-Absorber (B) umfasst.

4. Verwendung nach Anspruch 3, wobei die Konzentration des UV-Absorbers (B) 0,01 bis 1 Gew.-%, bezogen auf die gesamte Polyethylenzusammensetzung, beträgt.

5. Verwendung nach Anspruch 3 oder 4, wobei der UV-Absorber (B) 2-(3'-t-Butyl-5'-methyl-2'-hydroxyphenyl)-5-chlorbenzotriazol mit der CAS-Nummer 3896-11-5 ist.

6. Verwendung nach einem der vorhergehenden Ansprüche, wobei die Pigmente (C) ausgewählt sind aus Ultramarinblau mit der CAS-Nr. 57455-37-5 und/oder Titandioxid mit der CAS-Nr. 13463-67-8 und/oder Pigment Yellow 95 mit der CAS-Nr. 5280-80-8 und/oder Pigment Blue 15:1 mit der CAS-Nr. 147-14-8 oder irgendeiner Kombination davon.

7. Verwendung nach einem der vorhergehenden Ansprüche, wobei die Polyethylenzusammensetzung zu einem Rohr extrudiert wird.

## Revendications

1. Utilisation d'au moins un stabilisateur d'UV (A) de formule (II) 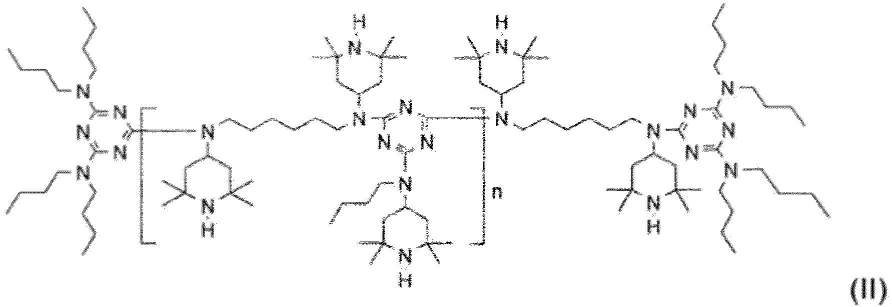 dans laquelle n vaut de 1 à 6, et une quelconque combinaison de ceux-ci,
pour améliorer la performance de dépôt pendant l'extrusion de compositions de polyéthylène comprenant un ou plusieurs pigments (C).

2. Utilisation selon l'une quelconque des revendications précédentes, dans laquelle la concentration du stabilisateur d'UV (A) est de 0,01 à 1 % en poids sur la base de la composition de polyéthylène totale.

3. Utilisation selon l'une quelconque des revendications précédentes, dans laquelle la composition de polyéthylène comprend en outre un absorbeur d'UV (B).

4. Utilisation selon la revendication 3, dans laquelle la concentration de l'absorbeur d'UV (B) est de 0,01 à 1 % en poids sur la base de la composition de polyéthylène totale.

5. Utilisation selon la revendication 3 ou 4, dans laquelle l'absorbeur d'UV (B) est le 2-(3'-t-butyl-5'-méthyl-2'-hydroxyphényl)-5-chlorobenzotriazole ayant le numéro CAS 3896-11-5.

6. Utilisation selon l'une quelconque des revendications précédentes, dans laquelle les pigments (C) sont choisis parmi le bleu outremer ayant le n° CAS 57455-37-5 et le dioxyde de titane ayant le n° CAS 13463-67-8 et/ou le pigment Jaune 95 ayant le n° CAS 5280-80-8 et/ou le pigment Bleu 15:1 ayant le n° CAS 147-14-8 ou une quelconque combinaison de ceux-ci.

7. Utilisation selon l'une quelconque des revendications précédentes, dans laquelle la composition de polyéthylène est extrudée en un tuyau.
